# EUROPÄISCHE PATENTANMELDUNG

(11) **EP 1 327 953 A1**
(43) Veröffentlichungstag der Anmeldung: **16.07.2003**
(21) Anmeldenummer: 02405197.1
(22) Anmeldetag: 14.03.2002
(51) Int. Cl.: G06F 17/60

(54) **System und Verfahren zum Messen der Nutzung von Printmedien**

(71) Anmelder: Novo Business Consultants AG, 3012 Bern (CH)
(72) Erfinder: Imboden, Carlo, 3145 Niederscherli (CH)
(74) Vertreter: BOVARD AG - Patentanwälte

(57) **Zusammenfassung**

Zum Messen der Nutzung von Printmedien wird ein System mit einer computerisierten Auswertungseinheit (2) vorgeschlagen, welche für Printmedienobjekte basierend auf erfassten leserspezifischen Printmedien-Nutzungsdaten automatisch Nutzungsprofile erstellt. Die Printmedien-Nutzungsdaten werden mittels mehrerer jeweils bei einem Leser positionierten Erfassungsmodulen (1, 1') erfasst. Dabei werden durch die Erfassungsmodule (1, 1') Kenndaten, die Inhaltsteile der Printmedienobjekte bestimmen, mittels eines Scanners (11) direkt von den Printmedienobjekten erfasst. Die Printmedien-Nutzungsdaten, die mindestens die Kenndaten enthalten, werden durch die Erfassungsmodule (1, 1') in einem Datenspeicher (13) gespeichert. Die erfassten Printmedien-Nutzungsdaten werden mittels Kommunikationsmodulen (16, 41), die jeweils mit den Erfassungsmodulen (1, 1') verbindbar sind, über ein Kommunikationsnetz (3), insbesondere ein Mobilfunknetz, an die Auswertungseinheit (2) übermittelt. Die empfangenen Printmedien-Nutzungsdaten werden durch die Auswertungseinheit (2) automatisch einem von mehreren in einer Leserdatenbank (24) gespeicherten Personalprofilen zugeordnet. Die Nutzungsprofile für die Printmedienobjekte werden durch die Auswertungseinheit (2) basierend auf den über das Kommunikationsnetz (3) empfangenen Printmedien-Nutzungsdaten, auf Inhaltsdaten (251), die in einer mit der Auswertungseinheit (2) verbundenen Printmediendatenbank (25) gespeichert sind, und auf den bestimmten Personalprofilen erstellt.

## Beschreibung

### Technisches Gebiet

Die vorliegende Erfindung betrifft ein System und ein Verfahren zum Messen der Nutzung von Printmedien. Die Erfindung betrifft insbesondere ein System und ein Verfahren zum Messen der Nutzung von Printmedien, in welchen durch eine computerisierte Auswertungseinheit automatisch ein Nutzungsprofil für mindestens ein Printmedienobjekt basierend auf erfassten Printmedien-Nutzungsdaten erstellt wird.

### Stand der Technik

Das Messen der Nutzung von Printmedien ermöglicht, Rückschlüsse auf die optimale Gestaltung von Printmedienobjekten zu ziehen - bezüglich Inhalt, Aufmachung und optische Gestaltung des Printmedienobjekts. Als Printmedienobjekte werden hier spezifische Zeitungen, Zeitschriften, Bücher, Werbebroschüren, Flugblätter (so genannte Flyers), so genannte Direct Mailings, Kalender, usw. bezeichnet. Ein bestimmtes Printmedienobjekt lässt sich auf das Nutzungsverhalten der Leserschaft ausrichten. Dabei dienen erfasste Nutzungsdaten als Grundlage, um das Printmedienobjekt inhaltlich und gestaltungsmässig auf die anvisierte Leserschaft auszurichten. Die erfassten Nutzungsdaten erlauben dem Anbieter von Printmedienobjekten zudem, ein bestimmtes Printmedienobjekt, beispielsweise einen bestimmten Titel einer Zeitung, auf dem Leser- wie auch auf dem Anzeigenmarkt besser zu vermarkten.

Das Wissen um die Nutzungsgewohnheiten von Leser und Leserinnen gestattet die Werbung, den Verkauf, die Verteilung und die Preisgestaltung auf die spezifischen Bedürfnisse der einzelnen Lesersegmente auszurichten. Die erfassten Nutzungsdaten bilden überdies eine Grundlage für die Vermarktung des Printmediums auf dem Werbemarkt - durch einen Nachweis der Printmediennutzung durch die verschiedenen Lesersegmente. Der Werbe- und Verkaufsprozess lässt sich nutzerorientiert gestalten, die Preisgestaltung für die Werbeflächen im Medium lässt sich ebenfalls nutzerorientiert differenzieren. Die Erfassung von Printmedien-Nutzungsdaten ermöglicht auch eine Reichweitenmessung für ein einzelnes Printmedienobjekt bzw. für eine Vielzahl von Printmedienobjekten.

In den herkömmlichen Verfahren zum Messen der Nutzung von Printmedien werden Leser von Printmedien nach dem Lesevorgang befragt, was sie in einem betreffenden Printmedienobjekt gelesen haben. Die herkömmlichen Befragungsmethoden erfolgen in der Regel mündlich in einem persönlichen Interview oder per Telefon, schriftlich mittels eines Fragebogens oder elektronisch mittels elektronischer Formulare, die beispielsweise per E-Mail übermittelt werden. Typischerweise werden die durch die Befragungen ermittelten Nutzungsdaten in einer Datenbank einer Auswertungseinheit gespeichert und durch die Auswertungseinheit mittels geeigneter statistischen Softwareapplikationen automatisch ein Nutzungsprofil für mindestens ein Printmedienobjekt erstellt. Dabei wird auf Grund der ermittelten Nutzungsdaten, bestimmt, ob und wie oft individuelle Inhaltsteile des Printmedienobjekts, wie Artikel und Bilder, durch welche Befragten gelesen respektive betrachtet wurden. Der Nachteil dieser herkömmlichen Methoden liegt in der Unzuverlässigkeit der Datenerfassung. Die Befragten können sich nie genau daran erinnern, was sie tatsächlich gelesen haben. Das liegt darin begründet, dass der Lesevorgang mehrheitlich ein unbewusster kognitiver Prozess und damit ein nur schwer erinnerbarer und artikulierbarer Vorgang ist. Ein weiterer Nachteil der herkömmlichen Verfahren besteht darin, dass sich die kontinuierliche Überwachung der Nutzung eines periodisch erscheinenden Printmedienobjekts über mehrere Ausgaben hinweg äusserst zeitaufwendig und unwirtschaftlich gestaltet. Deswegen erweisen sich Nutzungsmessungen mittels der herkömmlichen Verfahren oft als ungenau, da sie von der Zufälligkeit einer einzelnen Ausgabe geprägt sind (z.B. durch die Montagsausgabe einer Tageszeitung mit Berichterstattung über die Wahlen des Wochenendes).

### Darstellung der Erfindung

Es ist eine Aufgabe der vorliegenden Erfindung, ein neues System und ein neues Verfahren zum Messen der Nutzung von Printmedien vorzuschlagen, welche nicht die Nachteile des Stands der Technik aufweisen und welche insbesondere die Erfassung von Nutzungsdaten während des Lesens, kontinuierlich über mehrere Ausgaben eines Printmedienobjekts ermöglichen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Das System zum Messen der Nutzung von Printmedien umfasst eine computerisierte Auswertungseinheit, insbesondere eine computerisierte Auswertungszentrale, zur automatischen Erstellung eines Nutzungsprofils für ein Printmedienobjekt basierend auf erfassten Printmedien-Nutzungsdaten. Die oben genannten Ziele werden durch die Erfindung insbesondere dadurch erreicht, dass das System mehrere jeweils bei einem Leser positionierte Erfassungsmodule zur Erfassung von leserspezifischen Printmedien-Nutzungsdaten umfasst, wobei die Erfassungsmodule jeweils Mittel zum Erfassen von Kenndaten, die Inhaltsteile des Printmedienobjekts bestimmen, und Datenspeicher zum Speichern der erfassten Printmedien-Nutzungsdaten, die mindestens die Kenndaten enthalten, umfassen, dass das System mehrere jeweils mit einem der Erfassungsmodule verbindbare Kommunikationsmodule zur Übermittlung der erfassten Printmedien-Nutzungsdaten über ein Kommunikationsnetz an die Auswertungseinheit umfasst, dass das System eine mit der Auswertungseinheit verbundene Printmediendatenbank mit darin gespeicherten Inhaltsdaten zum Printmedienobjekt umfasst, und dass die Auswertungseinheit ein Auswertungsmodul zur automatischen Erstellung eines Nutzungsprofils für das Printmedienobjekt basierend auf den über das Kommunikationsnetz empfangenen Printmedien-Nutzungsdaten und auf den gespeicherten Inhaltsdaten umfasst.

Durch die Erfassung von Kenndaten zur Identifizierung von Inhaltsteilen eines Printmedienobjekts durch Erfassungsmodule, die beim Leser positioniert sind, können Printmedien-Nutzungsdaten durch den Leser unmittelbar während des Lesens erfasst werden. Dadurch ergeben sich keine Verzögerungen und Erinnerungslücken bei der Erfassung der Nutzungsdaten, was die Genauigkeit der Messung der Printmediennutzung erhöht und die zeitliche Verfügbarkeit beschleunigt. Zudem entfällt der Zeit- und Personalaufwand für die mündliche Befragung der Leser. Durch die Verbindung des Erfassungsmoduls mit einem Kommunikationsmodul können die erfassten Printmedien-Nutzungsdaten zudem unmittelbar nach deren Erfassung automatisch an die Auswertungseinheit übermittelt werden, was die zentralisierte Sammlung der Nutzungsdaten so beschleunigt, dass Auswertungen der Nutzungsdaten den interessierten Anbietern der Printmedien sehr schnell geliefert werden können, beispielsweise am nachfolgenden Tag einer Zeitungsausgabe. Die in der Printmediendatenbank gespeicherten Inhaltsdaten ermöglichen der Auswertungseinheit gelesene respektiv betrachtete Inhaltsteile des Printmedienobjekts durch einen Vergleich der empfangenen Kenndaten mit den gespeicherten Inhaltsdaten zu identifizieren, so dass Text- und Bildteile des Printmedienobjekts als Kenndaten verwendet werden können.

Vorzugsweise umfassen die Erfassungsmodule jeweils Erfassungsmittel zum Erfassen der Kenndaten direkt vom Printmedienobjekt und die Auswertungseinheit umfasst Mittel zur automatischen Zuordnung von Kenndaten zu den gespeicherten Inhaltsdaten. Durch das Erfassen der Kenndaten direkt vom Printmedienobjekt entfällt eine manuelle Eingabe von Informationen zur Identifizierung von Inhaltsteilen wie Artikeln oder Bildern, die von den Lesern sonst als umständlich und lästig empfunden werden könnte. Neben dem Erfassungsmodul und dem betreffenden Printmedienobjekt braucht der Leser zudem keine anderen störenden Gegenstände wie Schreibmaterial und Formulare zu verwenden.

In einer Ausführungsvariante umfassen die Erfassungsmodule jeweils einen Scanner zum Abtasten von Inhaltsteilen direkt vom Printmedienobjekt, das System umfasst Mittel zur Umwandlung der abgetasteten Inhaltsteile in Textteile, die gespeicherten Inhaltsdaten umfassen Textdaten des Printmedienobjekts und die Auswertungseinheit umfasst Mittel zur automatischen Zuordnung von Textteilen zu den gespeicherten Inhaltsdaten. Die Verwendung von Textteilen als Kenndaten ermöglicht zusätzlich zur Identifizierung von Artikeln in einem Printmedienobjekt auch die Erfassung von Kennwerten für die Markierung von Abschnitten, die in diesen Artikeln gelesen werden. Falls die Umwandlung der abgetasteten Inhaltsteile in Textteile im Erfassungsmodul erfolgt, ergibt die Übermittlung von Textteilen über das Kommunikationsnetz zudem eine hinsichtlich des benötigten Datenvolumens effiziente Datenübertragung.

In einer Ausführungsvariante sind die Kommunikationsmodule jeweils als mobile, tragbare Kommunikationsvorrichtungen ausgestaltet, die Kommunikationsmodule umfassen jeweils ein Mobilfunkmodul zur Datenübermittlung über ein Mobilfunknetz, die Erfassungsmodule sind jeweils als mobile, tragbare Vorrichtungen ausgestaltet und die Erfassungsmodule sind jeweils entfernbar mit dem Kommunikationsmodul von einer der mobilen Kommunikationsvorrichtungen verbindbar. In einer alternativen Ausführungsvariante sind die Erfassungsmodule jeweils als mobile, tragbare Vorrichtungen ausgestaltet und diese mobilen, tragbaren Vorrichtungen umfassen jeweils ein mit dem Erfassungsmodul verbundenes Mobilfunkmodul zur Datenübermittlung über ein Mobilfunknetz. Die bevorzugte Ausgestaltung des Erfassungsmoduls als mobile, tragbare Vorrichtungen ermöglicht die mobile Erfassung von Printmedien-Nutzungsdaten, so dass die Erfassung nicht nur auf den Arbeitsplatz oder den Heimbereich beschränkt ist, sondern beispielsweise auch in öffentlichen Verkehrsmitteln, in Restaurants usw. erfolgen kann.

Vorzugsweise umfasst das System eine mit der Auswertungseinheit verbundene Leserdatenbank mit darin gespeicherten Personalprofilen von Lesern und das System umfasst Identifizierungsmittel zur automatischen Zuordnung der in der Auswertungseinheit von einem der Kommunikationsmodule empfangenen Printmedien-Nutzungsdaten zu einem der gespeicherten Personalprofile. Durch die Identifizierung von gespeicherten Personalprofilen, die den erfassten Printmedien-Nutzungsdaten zugeordnet sind, können die Nutzungsdaten auch hinsichtlich soziologischer Aspekte, insbesondere hinsichtlich soziodemographischer Kriterien, ausgewertet werden.

### Kurze Beschreibung der Zeichnungen

Nachfolgend wird eine Ausführung der vorliegenden Erfindung anhand eines Beispieles beschrieben. Das Beispiel der Ausführung wird durch die folgende einzige beigelegte Figur illustriert:

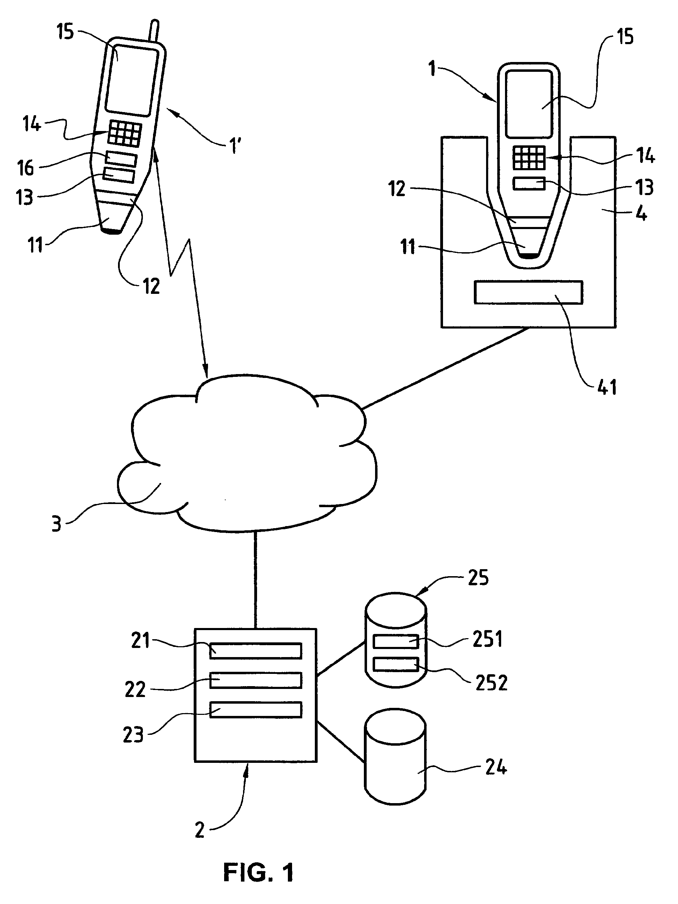

Figur 1 zeigt ein Blockdiagramm eines Systems zum Messen der Nutzung von Printmedien, in welchem Erfassungsmodule über ein Kommunikationsnetz mit einer computerisierten Auswertungseinheit verbunden sind.

### Wege zur Ausführung der Erfindung

In der Figur 1 werden einander entsprechende, gleiche Komponenten durch gleiche Bezugszeichen bezeichnet. In der Figur 1 beziehen sich die Bezugszeichen 1 und 1' jeweils auf ein Erfassungsmodul, das als mobile tragbare Vorrichtung ausgeführt ist. Im Unterschied zum Erfassungsmodul 1 umfasst das Erfassungsmodul 1' zusätzlich ein Kommunikationsmodul 16, das für die Datenkommunikation über ein Mobilfunknetz ausgeführt ist, beispielsweise für ein GSM- (Global System for Mobile Communication) oder ein UMTS-Netz (Universal Mobile Telephone System) oder für ein anderes, beispielsweise satellitenbasiertes Mobilfunknetz. Das Erfassungsmodul 1 hingegen ist mit einer kontaktlosen oder kontaktbehafteten Geräteschnittstelle (nicht dargestellt) für die entfernbare Verbindung mit einem in der Kommunikationsvorrichtung 2 vorgesehenen Kommunikationsmodul 41 ausgerüstet. Das Kommunikationsmodul 41 entspricht vorzugsweise in seiner Funktionalität dem Kommunikationsmodul 16. Das Kommunikationsmodul 41 könnte aber in einer alternativen Ausführungsvariante für die Datenkommunikation über ein Festnetz ausgeführt sein, beispielsweise das öffentliche geschaltete Telefonnetz oder ein ISDN-Netz (Integrated Services Digital Network). Wie in der Figur 1 schematisch dargestellt ist, ist das Kommunikationsmodul 41 in einer Kommunikationsvorrichtung 4 angebracht, welche als Aufnahmevorrichtung (oder so genannte Docking Station) für das Erfassungsmodul 1 ausgestaltet ist. Durch die Aufnahme des Erfassungsmoduls 1 in der Kommunikationsvorrichtung 4, wird das Erfassungsmodul 1 entfernbar über die oben erwähnte Geräteschnittstelle mit dem Kommunikationsmodul 41 verbunden.

Die Erfassungsmodule 1, 1' umfassen jeweils einen Scanner 11 zum Abtasten von Inhaltsteilen eines Printmedienobjekts, beispielsweise ein Textausschnitt von einigen Worten oder ein Bildausschnitt. Die Erfassungsmodule 1, 1' umfassen zudem vorzugsweise ein Umwandlungsmodul zum Umwandeln von abgetasteten Inhaltsteilen in Textteile, insbesondere ein OCR-Modul 12 (Optical Character Recognition). Die Erfassungsmodule 1, 1' umfassen zudem einen Datenspeicher 13 zum Speichern der erfassten Inhaltsteile und/oder der gewandelten Textteile.

Mittels des Scanners 11 abgetastete Inhaltsteile, insbesondere die daraus gewandelten Textteile, werden durch das Erfassungsmodul 1, 1' auf der Anzeige 15 dargestellt.

Wie in der Figur 1 schematisch dargestellt ist umfassen die Erfassungsmodule 1, 1' Bedienungselemente 14, mittels dessen Funktionen der Erfassungsmodule 1, 1' angewählt, aktiviert und deaktiviert werden können. Die Bedienungselemente 14 umfassen vorzugsweise einen Rolltaster, der insbesondere für die Auswahl von aufgelisteten Optionen geeignet ist. Zudem können mittels der Bedienungselemente 14 zusätzlich zu den erfassten und angezeigten Inhaltsteilen weitere Informationen eingegeben werden.

An dieser Stelle soll festgehalten werden dass die Erfassungsmodule 1,1' zusätzlich oder alternativ mit einem Sprachaufnahmemodul (nicht dargestellt) ausgestattet werden können, um vom Benutzer gesprochenen Text betreffend Inhaltsteile eines Printmedienobjekts, insbesondere gelesene Textabschnitte des Printmedienobjekts, aufzunehmen und im Datenspeicher 13 zu speichern. Mittels eines Spracherkennungsmoduls (nicht dargestellt) können die aufgenommenen Sprachsignale zudem in entsprechende Textteile gewandelt werden. Das Spracherkennungsmodul ist vorzugsweise in der Auswertungseinheit 2 ausgeführt. Spracherkennungsmodule können jedoch auch in den Erfassungsmodulen 1,1' integriert werden.

Die erfassten Inhaltsteile, insbesondere die abgetasteten und umgewandelten Textteile sowie die abgetasteten Bildteile (und/oder gegebenenfalls die aufgenommenen Sprachsignale), werden als Kenndaten zur Identifizierung von Inhaltsteilen, das heisst Textabschnitte und Bilder, eines Printmedienobjekts verwendet. Die über die Bedienungselemente 14 eingegebenen Zusatzinformationen können als subjektive Bewertungsinformationen (z.B. durch Auswahl aus vordefinierten Werten wie einverstanden - nicht einverstanden, gut - schlecht, usw.) des Benutzers und/oder zur Angabe der Lesetiefe (z.B. durch Auswahl aus vordefinierten Werten wie Titel gelesen, Titel und Vorspann gelesen, Fliesstext angelesen, Fliesstext zu Ende gelesen, Bild und Bildunterzeile gelesen, Grafik gelesen, Tabelle gelesen, usw.) verwendet werden. Die Kenndaten und die dazugehörenden Zusatzinformationen sind für den Leser zusammen auf der Anzeige 15 sichtbar und werden einander zugeordnet im Datenspeicher 13 als Printmedien-Nutzungsdaten gespeichert. Die Erfassungsmodule 1, 1' umfassen zudem ein Zeitbestimmungsmodul zur Bestimmung der Uhrzeit und des Datums der Datenerfassung. Die Uhrzeit und das Datum der Datenerfassung wird in die Printmedien-Nutzungsdaten eingefügt. Falls Leser bei der Messung der Nutzung von mehreren Printmedienobjekten teilnehmen, muss jeweils zusätzlich auch eine Identifizierung des betreffenden Printmedienobjekts vom Printmedienobjekt abgetastet oder mittels der Bedienungselemente 14 eingegeben werden (z.B. durch Auswahl aus einer vordefinierten Liste von Titeln und Ausgabe- oder Erscheinungsnummern, respektive -daten). Die Lesetiefe kann auch dadurch bestimmt werden, dass von einem Artikel mehrere Inhaltsteile abgetastet werden, beispielsweise ein Anfangsteil und ein Endteil, bis zu welchem der Artikel gelesen wurde.

An dieser Stelle soll angeführt werden, dass die Erfassungsmodule 1, 1' in einer alternativen Ausführungsvariante jeweils eine Messvorrichtung zum Erfassen von Koordinaten als Kenndaten von Inhaltsteilen eines Medienprintobjekts umfassen. Die Koordinaten werden beispielsweise mittels Distanzmessungen erfasst, indem mittels der Messvorrichtung die Distanz von einer Ecke des Printmedienobjekts zum betreffenden Inhaltsteil abgetastet wird. Die Messvorrichtung umfasst einen Scanner 11 und/oder ein Distanzmessrad. Zusätzlich zu den Koordinaten, respektive Distanzangaben, muss jeweils die Seitenzahl als Zusatzinformation eingegeben werden. Die Lesetiefe kann durch Abtasten von Anfangs- und Endkoordinaten bestimmt werden.

In einer weiteren Ausführungsvariante umfassen die Erfassungsmodule 1,1' eine Lesevorrichtung zum Lesen von Identifizierungsmarkierungen, die auf dem Papier des betreffenden Printmedienobjekts aufgedruckt sind und die ebenfalls als Kenndaten verwendbar sind. Die Identifizierungsmarkierungen sind beispielsweise in der Form von eindeutigen Punktierungen auf dem Papier angebracht (Punkteschwarm), welche dem Papier zwar einen leichten Grauschimmer verleihen können, aber den Lesevorgang in der Regel nicht stören.

Die Kommunikationsmodule 16, 41 dienen den Erfassungsmodulen 1, 1' zur Übermittlung der Printmedien-Nutzungsdaten über das Kommunikationsnetz 3 an die Auswertungseinheit 2. Das Kommunikationsnetz 3 umfasst das oben angeführte Mobilfunknetz und gegebenenfalls das oben angeführte Festnetz.

Die Auswertungseinheit 2 ist vorzugsweise als zentralisierte Auswertungszentrale ausgeführt. Die Auswertungseinheit 2 kann aber auch verteilt ausgeführt werden, so dass beispielsweise die Printmedien-Nutzungsdaten in verteilten ersten Einheiten gesammelt und zur Auswertung einer weiteren zweiten Einheit zugeführt werden. Die Auswertungseinheit 2 umfasst mindestens einen Computer und ist mit einer Printmediendatenbank 24 und einer Leserdatenbank 25 verbunden, die beide auf dem gleichen Computer der Auswertungseinheit 2 oder auf separaten Computern ausgeführt werden.

In der Printmediendatenbank 24 sind Inhaltsdaten 251 von verschiedenen Printmedienobjekten gespeichert. Die Inhaltsdaten 251 umfassen Textdaten mit dem gesamten Text eines Printmedienobjekts, inklusive dessen Aufbau mit Titel, Vorspann, Fliesstext, Bildunterzeilen, Tabellen, Seitenzahlen usw. Die Inhaltsdaten umfassen zudem auch Grafiken und Bilder. Diesen einzelnen Inhaltsobjekten der Inhaltsdaten 251 sind in der Printmediendatenbank 24 zudem weitere Klassifizierungsinformationen wie Rubrik, Inserateteil oder Werbeteil zugeordnet.

In der Printmediendatenbank 24 (oder in einer separaten Datenbank) sind zudem Printmedien-Nutzungsdaten 252 gespeichert, die von den Erfassungsmodulen 1, 1' über das Kommunikationsnetz 3 empfangen wurden.

In der Leserdatenbank 25 sind Leserprofile von Lesern als individuelle Profile oder als Gruppenprofile gespeichert. Die Leserprofile umfassen vorzugsweise soziologische Profildaten der Leser. Den einzelnen Leserprofilen sind jeweils Gruppen-, Teilnehmer- oder Endgeräteidentifizierungen der zugehörigen Leser zugeordnet. Die Endgeräteidentifizierungen sind beispielsweise die Kommunikationsadressen oder Rufnummern der betreffenden Kommunikationsmodule 16, 41, beispielsweise eine MSISDN (Mobile Subscriber ISDN), die den betreffenden Lesern zugeteilt wurde. Die Gruppen- oder Teilnehmeridentifizierungen sind beispielsweise numerische oder alphanumerische Codes, die den betreffenden Lesern zugeteilt wurden.

Die Auswertungseinheit 2 umfasst Identifizierungsmittel 23 zur automatischen Zuordnung der empfangenen Printmedien-Nutzungsdaten zu einem der gespeicherten Personalprofile. Die Identifizierungsmittel 23 umfassen vorzugsweise programmierte Softwaremodule, die die oben erwähnten Gruppen-, Teilnehmer- oder Endgeräteidentifizierungen und die zugeordneten Personalprofile bestimmen. Die Endgeräteidentifizierungen sind beispielsweise aus der Netzinfrastruktur des Kommunikationsnetzes 3 verfügbar, beispielsweise basierend auf bekannten Mechanismen wie ANI (Automatic Number Identification) oder ACI (Automatic Caller Identification). Die Gruppen- oder Teilnehmeridentifizierungen sind beispielsweise in den empfangenen Printmedien-Nutzungsdaten enthalten.

Die Auswertungseinheit 2 umfasst zudem ein Vergleichsmodul 22 zur automatischen Zuordnung von empfangenen Kenndaten zu gespeicherten Inhaltsdaten 251. Das Vergleichsmodul 22 ist vorzugsweise ein programmiertes Softwaremodul. Für Kenndaten in Form von gewandelten Textteilen genügt ein Vergleich der empfangenen Textteile mit den gespeicherten Textdaten. Für Kenndaten in Form von ungewandelten abgetasteten Inhaltsteilen umfasst das Vergleichsmodul Bildverarbeitungsmittel zur Bestimmung der Übereinstimmung des empfangenen abgetasteten Inhaltsteils mit gespeicherten abgetasteten Inhaltsdaten. Für Kenndaten in Form von Koordinaten bestimmt das Vergleichsmodul Inhaltsteile auf der betreffenden Seite des Printmedienobjekts, auf die die empfangenen Koordinaten zutreffen.

Schliesslich umfasst die Auswertungseinheit 2 ein Auswertungsmodul 21, das vorzugsweise als programmiertes Softwaremodul ausgeführt ist. Das Auswertungsmodul 21 erstellt basierend auf den empfangenen Printmedien-Nutzungsdaten, auf den gespeicherten Inhaltsdaten und auf den gespeicherten Personalprofilen ein Nutzungsprofil für ein oder mehrere Printmedienobjekte. Unter Verwendung der durch die Identifizierungsmittel 23 und das Vergleichsmodul 22 bestimmten Angaben wird für ein betreffendes Printmedienobjekt bestimmt, welche Inhaltsteile durch welche Personengruppen wie oft und wie tief gelesen, respektive betrachtet wurden.

Durch die Leser, die an der Messung der Nutzung eines oder mehrerer Printmedienobjekte teilnehmen, werden die Kenndaten der von ihnen gelesenen Artikel und betrachteten Bilder mittels der Erfassungsmodule 1, 1' erfasst. Gegebenenfalls werden zusätzliche Bewertungsinformationen und/oder Angaben zu der Lesetiefe eingegeben. Die erfassten Printmedien-Nutzungsdaten werden in einem Datenspeicher 13 des Erfassungsmoduls 1, 1' gespeichert. Die gespeicherten Printmedien-Nutzungsdaten werden durch das Kommunikationsmodul 16, 41 automatisch über das Kommunikationsnetz 3 an die Auswertungseinheit 2 übermittelt. In der Auswertungseinheit 2 werden die empfangenen Printmedien-Nutzungsdaten einem gespeicherten Personalprofil zugeordnet. Auf Grund der empfangenen Kenndaten werden in der Auswertungseinheit 2 die Inhaltsteile des betreffenden Printmedienobjekts bestimmt, die gelesen respektive betrachtet wurden. Auf der Grundlage der bestimmten Inhaltsteile und der bestimmten Personalprofile wird in der Auswertungseinheit 2 ein Nutzungsprofil für ein oder mehrere Printmedienobjekte erstellt.

### Gewerbliche Anwendbarkeit

Die vorliegende Erfindung ermöglicht die Nutzung und die Reichweite von Printmedien zuverlässig und effizient zu messen.

### Legende der Bezugszeichen

- 1, 1': Erfassungsmodul
- 2: computerisierte Auswertungseinheit
- 3: Kommunikationsnetz
- 4: Kommunikationsvorrichtung
- 11: Scanner
- 12: OCR-Modul
- 13: Datenspeicher
- 14: Bedienungselemente
- 15: Anzeige
- 16: Kommunikationsmodul (Mobilfunkmodul)
- 21: Auswertungsmodul
- 22: Mittel zur automatischen Zuordnung von Kenndaten zu gespeicherten Inhaltsdaten
- 23: Identifizierungsmittel
- 24: Printmediendatenbank
- 25: Leserdatenbank
- 41: Kommunikationsmodul
- 251: Inhaltsdaten
- 252: Printmedien-Nutzungsdaten

## Patentansprüche

1. System zum Messen der Nutzung von Printmedien, welches eine computerisierte Auswertungseinheit (2) zur automatischen Erstellung eines Nutzungsprofils für mindestens ein Printmedienobjekt, basierend auf erfassten leserspezifischen Printmedien-Nutzungsdaten umfasst, **dadurch gekennzeichnet,**
**dass** das System mehrere, jeweils bei einem Leser positionierte Erfassungsmodule (1, 1') zur Erfassung der Printmedien-Nutzungsdaten umfasst, wobei die Erfassungsmodule (1, 1') jeweils Mittel (11, 12) zum Erfassen von Kenndaten, die Inhaltsteile des mindestens einen Printmedienobjekts bestimmen, und Datenspeicher (13) zum Speichern der erfassten Printmedien-Nutzungsdaten, die mindestens die Kenndaten enthalten, umfassen,
**dass** das System mehrere, jeweils mit einem der Erfassungsmodule (1, 1') verbindbare Kommunikationsmodule (16, 41) zur Übermittlung der erfassten Printmedien-Nutzungsdaten über ein Kommunikationsnetz (3) an die Auswertungseinheit (2) umfasst,
**dass** das System eine mit der Auswertungseinheit (2) verbundene Printmediendatenbank (25) mit darin gespeicherten Inhaltsdaten (251) zu dem mindestens einen Printmedienobjekt umfasst, und
**dass** die Auswertungseinheit (2) ein Auswertungsmodul (21) zur automatischen Erstellung eines Nutzungsprofils für das mindestens eine Printmedienobjekt, basierend auf den über das Kommunikationsnetz (3) empfangenen Printmedien-Nutzungsdaten und auf den gespeicherten Inhaltsdaten (251) umfasst.

2. System gemäss Anspruch 1, **dadurch gekennzeichnet, dass** die Erfassungsmodule (1, 1') jeweils Erfassungsmittel (11) zum Erfassen der Kenndaten direkt von dem mindestens einen Printmedienobjekt umfassen, und dass die Auswertungseinheit (2) Mittel (22) zur automatischen Zuordnung von Kenndaten zu den gespeicherten Inhaltsdaten (251) umfasst.

3. System gemäss Anspruch 2, **dadurch gekennzeichnet, dass** die Erfassungsmodule (1, 1') jeweils einen Scanner (11) zum Abtasten von Inhaltsteilen direkt von dem mindestens einen Printmedienobjekt umfassen, dass das System Mittel (12) zur Umwandlung der abgetasteten Inhaltsteile in Textteile umfasst, dass die gespeicherten Inhaltsdaten (251) Textdaten von dem mindestens einen Printmedienobjekt umfassen, und dass die Auswertungseinheit (2) Mittel (22) zur automatischen Zuordnung von Textteilen zu den gespeicherten Inhaltsdaten umfasst.

4. System gemäss einem der Ansprüche 1 bis 3, **dadurch gekennzeichnet, dass** die Kommunikationsmodule (41) jeweils als mobile, tragbare Kommunikationsvorrichtungen (4) ausgestaltet sind, dass die Kommunikationsmodule (41) jeweils ein Mobilfunkmodul zur Datenübermittlung über ein Mobilfunknetz umfassen, dass die Erfassungsmodule (1) jeweils als mobile, tragbare Vorrichtungen ausgestaltet sind, und dass die Erfassungsmodule (1) jeweils entfernbar mit dem Kommunikationsmodul (41) von einer der mobilen Kommunikationsvorrichtungen (4) verbindbar sind.

5. System gemäss einem der Ansprüche 1 bis 3, **dadurch gekennzeichnet, dass** die Erfassungsmodule (1') jeweils als mobile, tragbare Vorrichtungen ausgestaltet sind, und dass diese mobilen, tragbaren Vorrichtungen jeweils ein mit dem Erfassungsmodul (1') verbundenes Mobilfunkmodul (16) zur Datenübermittlung über ein Mobilfunknetz umfassen.

6. System gemäss einem der Ansprüche 1 bis 5, **dadurch gekennzeichnet, dass** das System eine mit der Auswertungseinheit (2) verbundene Leserdatenbank (24) mit darin gespeicherten Personalprofilen von Lesern umfasst, dass das System Identifizierungsmittel (23) umfasst zur automatischen Zuordnung der in der Auswertungseinheit (2) von einem der Kommunikationsmodule (16, 41) empfangenen Printmedien-Nutzungsdaten zu einem der gespeicherten Personalprofile.

7. Verfahren zum Messen der Nutzung von Printmedien, in welchem Verfahren durch eine computerisierte Auswertungseinheit (2) für mindestens ein Printmedienobjekt automatisch ein Nutzungsprofil basierend auf erfassten leserspezifischen Printmedien-Nutzungsdaten erstellt wird, **gekennzeichnet durch**,
- Erfassen der Printmedien-Nutzungsdaten mittels mehrerer jeweils bei einem Leser positionierten Erfassungsmodulen (1, 1'), wobei Kenndaten, die Inhaltsteile des mindestens einen Printmedienobjekts bestimmen, **durch** die Erfassungsmodule (1, 1') erfasst und die Printmedien-Nutzungsdaten, die mindestens die Kenndaten enthalten, in einem Datenspeicher (13) gespeichert werden,
- Übermitteln der erfassten Printmedien-Nutzungsdaten mittels jeweils mit den Erfassungsmodulen (1, 1') verbindbaren Kommunikationsmodulen (16, 41) über ein Kommunikationsnetz (3) an die Auswertungseinheit (2), und
- Erstellen eines Nutzungsprofils **durch** die Auswertungseinheit (2) für das mindestens eine Printmedienobjekt, basierend auf den über das Kommunikationsnetz (3) empfangenen Printmedien-Nutzungsdaten und auf Inhaltsdaten (251), die in einer mit der Auswertungseinheit (2) verbundenen Printmediendatenbank (25) gespeichert sind.

8. Verfahren gemäss Anspruch 7, **dadurch gekennzeichnet, dass** die Kenndaten jeweils direkt von dem mindestens einen Printmedienobjekt erfasst werden, und dass die Kenndaten automatisch den gespeicherten Inhaltsdaten (251) zugeordnet werden.

9. Verfahren gemäss Anspruch 8, **dadurch gekennzeichnet, dass** mit den gespeicherten Inhaltsdaten (251) Textdaten von dem mindestens einen Printmedienobjekt gespeichert werden, dass Inhaltsteile jeweils mittels eines Scanners (11) direkt von dem mindestens einen Printmedienobjekt abgetastet werden, dass die abgetasteten Inhaltsteile in Textteile umgewandelt werden, und dass die Textteile automatisch den gespeicherten Inhaltsdaten (251) zugeordnet werden.

10. Verfahren gemäss einem der Ansprüche 7 bis 9, **dadurch gekennzeichnet, dass** Personalprofile von Lesern in einer mit der Auswertungseinheit (2) verbundenen Leserdatenbank (24) gespeichert werden, dass Printmedien-Nutzungsdaten, die in der Auswertungseinheit (2) von einem der Kommunikationsmodule (16, 41) empfangen wurden, durch die Auswertungseinheit (2) automatisch einem der gespeicherten Personalprofile zugeordnet werden, und dass die Personalprofile bei der Erstellung des Nutzungsprofils berücksichtigt werden.

11. Verfahren gemäss einem der Ansprüche 7 bis 10, **dadurch gekennzeichnet, dass** jeweils Kommunikationsmodule (41) verwendet werden, die als mobile, tragbare Kommunikationsvorrichtungen (4) ausgestaltet sind, dass die Kommunikationsmodule (41) jeweils mit einem Mobilfunkmodul zur Datenkommunikation über ein Mobilfunknetz versehen werden, dass jeweils Erfassungsmodule (1) verwendet werden, die als mobile, tragbare Vorrichtungen ausgestaltet sind, und dass die Erfassungsmodule (1) jeweils entfernbar mit dem Kommunikationsmodul (41) von einer der mobilen Kommunikationsvorrichtungen (4) verbunden werden.

12. Verfahren gemäss einem der Ansprüche 7 bis 10, **dadurch gekennzeichnet, dass** jeweils Erfassungsmodule (1') verwendet werden, die als mobile, tragbare Vorrichtungen ausgestaltet sind, und dass diese mobilen, tragbaren Vorrichtungen jeweils mit einem mit dem Erfassungsmodul (1') verbundenen Mobilfunkmodul (16) zur Datenkommunikation über ein Mobilfunknetz versehen werden.
